# EUROPEAN PATENT APPLICATION

(11) **EP 2 942 379 A1**
(43) Date of publication of application: **11.11.2015**
(21) Application number: 15156584.3
(22) Date of filing: 25.02.2015
(51) Int. Cl.: C09D 175/14, C08F 230/02, C09D 133/08

(54) **Surface coating compositions**

(30) Priority: 26.02.2014 US 201414190906
(71) Applicant: Armstrong World Industries, Inc., Lancaster, Pennsylvania 17603 (US)
(72) Inventor: Tian, Dong, Lancaster, PA Pennsylvania 17601 (US); Leininger, Larry W., Akron, PA Pennsylvania 17501 (US); Winey, Rebecca L., Lancaster, PA Pennsylvania 17603 (US)
(74) Representative: Jenkins, Peter David

(57) **Abstract**

Described herein are surface coating composition comprising: a UV curable urethane or acrylate having one or more phosphate ester moieties; and a silicone acrylate; along with methods of making and using same.

## Description

### Field

The present invention relates to surface coating compositions for use in coating substrates, and more particularly to ultraviolet curable coatings for flooring and other applications.

### Background

Radiation curable coatings, such as UV curable coatings, are applied to various types of substrates to enhance their durability and finish. These radiation curable coatings are typically mixtures of resins, including oligomers and monomers that are radiation curable after being applied to the substrate. The radiation curing polymerizes and/or cross-links the resins to produce high or low gloss coatings. Radiation curable coatings are used in a wide variety of flooring applications, such as on linoleum, hardwood, resilient sheet, and tile flooring.

While conventional coatings provide some protection to the substrate, these coatings are prone to damage from heat exposure, cleaning chemicals and ordinary wear-and-tear causing the appearance of the floor to become less desirable. Therefore, it would be desirable to have a coating which exhibits improved stain resistance, heat-exposure resistance, and scratch resistance.

Embodiments of the present invention are directed to these and other ends.

### Summary

Some embodiments of the present invention provide a surface coating composition comprising: a UV curable urethane or acrylate having one or more phosphate ester moieties; and a silicone acrylate.

Some embodiments provide A flooring product comprising: a substrate; and a coating comprising a coating composition which comprises: from about 1 wt.% to about 40 wt.% of a UV curable urethane or acrylate having one or more phosphate ester moieties; from about 0.1 wt.% to about 40 wt.% of a silicone acrylate; and from about 0.1 wt.% to about 40 wt.% of a flouropolymer.

Other embodiments provide methods of improving the scratch resistance, stain resistance and/or heat-exposure resistance of a flooring product comprising applying to the major surface of a substrate any one of the surface coating compositions described herein; and exposing the coated substrate to at least one radiation source.

Still further embodiments provide A heat-exposure resistant coating composition comprising: from about 1 wt.% to about 40 wt.% of a UV curable urethane or acrylate having one or more phosphate ester moieties, and from about 0.1 wt.% to about 40 wt.% of a silicone acrylate.

Other features and advantages of the present invention will be apparent from the following more detailed description of the preferred embodiment, taken in conjunction with the accompanying drawings which illustrate, by way of example, the principles of the invention.

### Detailed Description

As used herein, the term "UVA radiation" refers to UV radiation having the strongest wavelengths between 315-400 nm.

As used herein, the term "UVB radiation" refers to UV radiation having the strongest wavelengths between 280-315 nm.

As used herein, the term "UVC radiation" refers to UV radiation having the strongest wavelengths between 200-280 nm.

As used herein, the terms "cure" or "curing" refer to a change in state, condition, and/or structure in a material that is usually, but not necessarily, induced by at least one variable, such as time, temperature, moisture, radiation, presence and quantity in such material of a curing catalyst or accelerator, or the like such that the curable composition is crosslinked or polymerized. The terms cover partial as well as complete curing.

As used herein, the term "wt. %" refers to the weight percentage of the particular ingredient in the final coating composition.

As used here, the term "heat-exposure resistant" refers to burn and/or flame resistant properties.

Some embodiments of the present invention provide A surface coating composition comprising: a UV curable urethane or acrylate having one or more phosphate ester moieties; and a silicone acrylate. Some embodiments comprise from about 1 wt.% to about 40 wt.% of the UV curable urethane or acrylate having one or more phosphate ester moieties. Other embodiments comprise from about 2 wt.% to about 30 wt.% of the UV curable urethane or acrylate. Further embodiments comprise from about 3 wt.% to about 20 wt.% of the UV curable urethane or acrylate having one or more phosphate ester moieties. Still further embodiments comprise from about 4 wt.% to about 15 wt.% of the UV curable urethane or acrylate having one or more phosphate ester moieties. Some embodiments comprise about 6 wt.% of the UV curable urethane or acrylate having one or more phosphate ester moieties.

In some embodiments, the surface coating compositions of the present invention further comprise a fluoropolymer. Some embodiments, comprise from about 0.1 wt.% to about 40 wt.% of the flouropolymer. Further embodiments comprise from about 3 wt.% to about 20 wt.% of a fluoropolymer. Still further embodiments comprise from about 4 wt.% to about 15 wt.% of a fluoropolymer. Some embodiments comprise about 7 wt.% of a fluoropolymer.

In some embodiments, the surface coating compositions of the present invention comprises from about 1 wt.% to about 40 wt.% a silicone acrylate. Further embodiments comprise from about 3 wt.% to about 20 wt.% of a silicone acrylate. Still further embodiments comprise from about 4 wt.% to about 15 wt.% of a silicone acrylate. Some embodiments comprise about 7 wt.% of a silicone acrylate.

In some embodiments, the weight ratio of the UV curable urethane or acrylate to the silicone acrylate is less than 1:1.

Some embodiments provide a surface coating composition comprising from about 4 wt.% to about 15 wt.% of a UV curable urethane or acrylate having one or more phosphate ester moieties; and a silicone acrylate; wherein the ratio of the UV curable urethane or acrylate to the silicone acrylate is less than 1:1; and wherein the coating is substantially free of polyethylene.

In some embodiments, the weight ratio of fluoropolymer to silicone acrylate in the surface coating compositions is about 1:1. In some embodiments, the weight ratio of fluoropolymer to silicone acrylate in the surface coating compositions is 1:1.

In some emnbodiments, the fluoropolymer is a thermoplastic polymer. In some embodiments, the fluoropolymer is a hydrophobic thermoplastic polymer.

In some embodiments, the fluoropolymer comprises a homopolymer or copolymer comprising tetrafluoroethylene, vinylidene fluoride or chlorotrifluoroethylene monomer. In some embodiments, suitable fluoropolymers include polyterafluoroethylene, polyvinylidene fluoride, polyvinylfluoride, polychlorotrifluroethylene, fluorinated ethylene propylene, polyethylenetetrafluoroethylene and mixtures thereof. In some embodiments, the fluoropolymer is selected from polytetrafluoroethylene (PTFE) and polyvinylidenefluouride (PVDF). In some embodiments, the fluoropolymer is PTFE.

In some embodiments, the fluoropolymer functions as a flattening or matting agent. In some embodiments, suitable fluoropolymers are in particulate form, e.g., powder. In some embodiments, suitable fluoropolymers are selected from fluoropolymer waxes. In some embodiments, the fluoropolymer has an average particle size of from about 1 to about 20 microns. In some embodiments, the fluoropolymer is in powder form having an average particle size of from about 1 to about 20 microns. In some embodiments, the fluoropolymer is in particulate form having an average particle size of from about 2 to about 50 microns. In some embodiments, the fluoropolymer is in powder form having an average particle size of from about 6 to about 8 microns.

In some embodiments, the surface coating compositions of the present invention may be substantially free of polyethylene, depending on the desired use and properties of the composition.

In some embodiments, the surface coating compositions further comprise an abrasive selected from aluminum oxide; silica and a combination thereof. In some embodiments, the surface coating compositions comprise a combination of aluminum oxide and silica.

In some embodiments, the surface coating compositions of the present invention comprise from about 1 wt.% to about 40 wt.% of a UV curable urethane or acrylate having one or more phosphate ester moieties; from about 0.1 wt.% to about 40 wt.% of a silicone acrylate; and from about 0.1 wt.% to about 40 wt.% of a flouropolymer. In some embodiments, the surface coating compositions of the present invention comprise from about 3 wt.% to about 15 wt.% of a UV curable urethane or acrylate having one or more phosphate ester moieties; from about 3 wt.% to about 15 wt.% of a silicone acrylate; and from about 3 wt.% to about 15 wt.% of a flouropolymer. In some embodiments, the surface coating compositions of the present invention comprise from about 4 wt.% to about 15 wt.% of a UV curable urethane or acrylate having one or more phosphate ester moieties; from about 6 wt.% to about 15 wt.% of a silicone acrylate; and from about 3 wt.% to about 15 wt.% of a flouropolymer. Further embodiments provide surface coating compositions comprising: about 6 wt.% of a UV curable urethane or acrylate having one or more phosphate ester moieties; about 7 wt.% of the silicone acrylate; and about 7 wt.% of the fluoropolymer.

Suitable UV curable acrylates having one or more phosphate ester moieties include monoester and diester phosphate esters of hydroxyalkyl acrylates and hydroxyalkyl methacrylates, for example, disclosed in U.S. Pat. No. 3,855,364. Suitable UV curable urethanes having one or more phosphate ester moieties include acrylated urethanes containing one or more phosphate ester moieties, a reaction product of a hydroxyalkyl acrylate or hydroxyalkyl methacrylate reacted with an isocyanate and a phosphate ester, for example, a mono- or di-ester disclosed in U.S. Pat. No. 3,855,364. In some embodiments, the content of phosphate esters is between 5 wt.% to 7wt.% of the UV curable urethane.

In some embodiments, the surface coating compositions of the present invention demonstrate a Δb of less than 10 in a 1-minute iodine test. In some embodiments, the surface coating compositions of the present invention demonstrate greater than 90% gloss retention in a Gardner Scratch Test. In some embodiments, the surface coating compositions of the present invention demonstrate a Δb of less than 10 in a 1-minute iodine test and greater than 90% gloss retention in a Gardner Scratch Test. These tests are further described in the example section.

Some embodiments of the present invention provide a flooring product comprising: a substrate; and any one of the coating compositions described herein. Some embodiments of the present invention provide a flooring product comprising: a substrate; and a coating comprising a coating composition which comprises: from about 1 wt% to about 40 wt% of a UV curable urethane or acrylate having one or more phosphate ester moieties; from about 0.1 wt% to about 40 wt% of a silicone acrylate; and from about 0.1 wt% to about 40 wt% of a flouropolymer.

Other embodiments provide a flooring product comprising: a substrate; and a coating comprising: from about 4 wt.% to about 15 wt.% of a UV curable urethane or acrylate having one or more phosphate ester moieties; from about 6 wt.% to about 15 wt.% of a silicone acrylate; and from about 3 wt.% to about 15 wt.% of a flouropolymer; wherein the ratio of UV the curable urethane or acrylate to the silicone acrylate is less than 1:1; and wherein the coating is substantially free of polyethylene.

Suitable substrates for the invention include vinyl tiles and sheets, polymeric laminates, wood laminates, solid wood flooring materials, and ceiling tiles. In some embodiments, the substrate comprises a plurality of layers. In some embodiments, the substrate comprises a decorative layer; a wear layer; and a backing layer. In some embodiments, the decorative layer and wear layer are combined in single layer.

Some embodiments of the present invention provide methods of improving the scratch resistance of a flooring product comprising applying to the major surface of a substrate, any one of the surface coating compositions described herein; and exposing the coated substrate to at least one radiation source. Other embodiments provide methods of improving the stain resistance of a flooring product comprising applying to the major surface of a substrate, any one of the surface coating compositions described herein; and exposing the coated substrate to at least one radiation source. Further embodiments of the present invention provide methods of improving the heat-exposure resistance of a flooring product comprising applying to the major surface of a substrate, any one of the surface coating compositions described herein; and exposing the coated substrate to at least one radiation source.

Yet other embodiments of the present invention provide heat-exposure resistant coating compositions comprising: from about 1 wt.% to about 40 wt.% of a UV curable urethane or acrylate having one or more phosphate ester moieties, and from about 0.1 wt.% to about 40 wt.% of a silicone acrylate.

In some embodiments, the surface coating compositions of the present invention comprise a photoinitiator, which absorbs only in the UV range of the electromagnetic spectrum. As such, the photoinitiator absorbs radiation at wavelengths lying outside, or shorter than, the visible light spectrum, generally less than about 420 nm. The photoinitiator responds to such UV radiation to initiate and induce curing of the curable resin component.

Photoinitiators that may be employed include any photoinitiator known in the art and which is activated by ultraviolet radiation. The photoinitiator is usually, but not necessarily, a free radical photoinitiator. Suitable free radical photoinitiators include unimolecular (Norrish Type I and Type II), bimolecular (Type II), and biomolecular photosensitization (energy transfer and charge transfer). Exemplary free radical photoinitiators that may be employed include, but are not limited to, diphenyl ketone, 1-hydroxycyclohexyl phenyl ketone, phenyl bis (2,4,6-trimethyl benzoyl)phosphine oxide, Esacure KTO-46 (a mixture of phosphine oxide, Esacure KIP150 and Esacure TZT), 2,4,6-trimethylbenzoyldiphenyl phosphine oxide, isopropylthioxanthone, 1-chloro-4-propoxy-thioxanthone, 2,4-diethylthioxanthone, 2-chlorothioxanthone, camphorquinone, 2-ethyl anthraquinone, as well as Irgacure 1700, Irgacure 2020, Irgacure 2959, Irgacure 500, Irgacure 651, Irgacure 754, Irgacure 907, Irgacure 184 1-hydro-xyclohexyl phenyl ketone all available from BASF. Other photoinitiators that may be employed include Speedcure BP and Speedcure 84 all available from Lampson.

In some embodiments, the photoinitiator may be a benzophenone (such as, but not limited to, diphenyl ketone) or substituted benzophenone, such as, for example, an alpha-hydroxyketone. One particularly suitable alpha-hydroxyketone is 1-hydroxy-cyclohexylphenyl-ketone. Photoinitiators may be present in the coating compositions, for example, in an amount from about 1 wt. % to about 15 wt. % by weight in the final composition; optionally in an amount from about 1 wt. % to about 10 wt. %.

In some embodiments, the surface coating compositions of the present invention comprise a thermal initiator. In some embodiments, the thermal initiator is azobisisoheptanonitrile, azobisisobutyronitrile, azobisisopentanonitrile, lauroyl peroxide, t-amyl-peroxypivlate, or t-butyl-peroxypivlate. In another aspect the photoinitiator is bis(2,4,6-trimethylbenzoyl)-phenylphosphineoxide, 1 -hydroxy-cyclohexyl-phenyl-ketone, 2,2-dimethoxy-1,2-diphenylethan-1-one or 2-methyl-1 [4-(methylthio)phenyl]-2-morpholinopropan-1-one.

Some embodiments provide surface coating compositions that further comprise from about 1 wt. % to about 5 wt. %, of an amine synergist. Some embodiments provide surface coating compositions comprising from about 2 wt. % to about 4 wt. %, of an amine synergist. Some embodiments provide surface coating compositions comprising about 3 wt.%, of an amine synergist.

Suitable amine synergists include, but are not limited to, 2-ethylhexyl-4-dimethylamino benzoate, ethyl 4-(dimethylamine) benzoate, N-methyl diethanolamine, 2-dimethylamino ethylbenzoate, and butoxyethyl-4-dimethylamino benzoate, as well as CN373, CN383, CN384, CN386 and CN 371, all available from Sartomer; and Ebecry P104, Ebecry P 115, Ebecry 7100, Roskydal UA XP 2299, all available from Allnex.

In some embodiments, the surface coating compositions of the present invention further comprise a surfactant. In some embodiments, the coating further comprises from about 0.1 wt. % to about 1 wt. % of a surfactant.

In some embodiments, the coating is applied to a major surface of the substrate. In some embodiments, the coating applied to a major surface of the substrate can be any one of the coatings described herein

Yet other embodiments provide a method of reducing the extent to which dirt is attracted to a surface of a flooring product comprising applying to the major surface of a substrate, any one of the coatings described herein; and exposing the coated substrate to at least one radiation source.

Still further embodiments provide a method of improving the cleanability of a surface of a flooring product comprising applying to the major surface of a substrate, any one of the the coatings described herein; and exposing the coated substrate to at least one radiation source.

In some embodiments, the present invention provides a method of reducing the oil-based staining of a flooring product comprising applying to the major surface of a substrate, any one of the coatings described herein; and exposing the coated substrate to at least one radiation source.

In some embodiments, the coating is applied to the substrate in amount sufficient to provide a wet thickness of from about 0.5 to 2 mils. In some embodiments, the coating is applied to the substrate in an amount sufficient to provide a wet thickness of about 1 mil. In some embodiments, the coated substrate is exposed to a plurality of radiation sources. In some embodiments, the coated substrate is exposed to an infrared radiation source. In some embodiments, the coated substrate is exposed to an ultraviolet radiation source. In some embodiments, the ultraviolet radiation source is selected from a UVA radiation source; a UVB radiation source; a UVC radiation source; and combination of two or more thereof.

In some embodiments, the surface coating compositions comprise an acrylate resin such as EC6360 polyester acrylate, EM 2204 tricyclodecane dimethanol diacrylate, EC6154B-80, EC6115J-80, EC6142H-80, and EC6145-100 all available from Eternal; Roskydal TP LS 2110, Roskydal UA VP LS 2266, Roskydal UA VP LS 2380, Roskydal UA VP LS 2381 (XD042709), Roskydal UA XP 2416, Desmolux U200, Desmolux U 500 acrylate, Desmolux U680H, Desmolux XP2491, Desmolux XP2513 unsaturated aliphatic urethane acrylate, Desmolux XP 2738 unsaturated aliphatic allophanate, Desmolux P175D, Roskydal UA TP LS 2258, Roskydal UA TP LS 2265, and Roskydal UA XP 2430 all available from Allnex; CD 406 cylohexane dimethanol diacrylate, CD420, CD611, CN965, CN966 A80, CN966 J75, CN981, CN991, CN2920, CN2282, CN985B88, CN2003B, , 2-EHA, , CN 307 hydrophobic acrylate ester, CN 308 hydrophobic acrylate ester, hydrophobic acrylate ester, CN 989 aliphatic urethane acrylate oligomer, CN 9007aliphatic urethane acrylate, CN 9009 aliphatic urethane acrylate, CN 9011 aliphatic urethane acrylate, CN 9014 hydrophobic urethane acrylate, SR 339 2-phenoxyethyl acrylate, SR 531 cyclic trimethylolpropane formal acrylate, SR 540 ethoxylated(4) bisphenol A dimethacrylate, SR 3010, SR 9035, SR833S tricyclodecane dimethanol dimethacrylate, SR531 2-phenoxyethyl acrylate, SR 351, SR 306, SR395, SR 238, SR399, SR324, SR257, SR-502, SR203 all available from Sartomer; Disperbyk 2008 acrylic block copolymer from BYK Chemie; Ebecryl 230, Ebecryl 270, Ebecryl 4830, Ebecryl 4833, Ebecryl 4883, Ebecryl 8402, Ebecryl 8405, Ebecryl 8411, Ebecryl 8807, and Ebecryl 809, Ebecry 114 2-phenoxyethyl acrylate , dipropylene glycol diacrylate (DPGDA), neopentyl glyco propoxylate (2) diacrylate (NPG(PO)2DA), trimethylolpropane ethoxy triacrylate (TMPEOA), isobornyl acrylate (IBOA), Ebecryl 114, and Ebecryl 381 all available from Allnex; and AR-25 polyester acrylate. AR-25 may be formed according to the procedure of Example 7 of U.S. Patent No. 5,891,582, which is hereby incorporated herein in its entirety.

Abrasives may be present in the coating compositions. Abrasives that may be employed include, but are not limited to: aluminum oxide, fluorite, apatite, feldspar, nepheline syenite, glass, quartz, ceramic, silicon nitride, silicon carbide (carborundum), tungsten carbide, titanium carbide, topaz, corundum/ sapphire (Al₂O₃), diamond, and combinations thereof. A non-limiting example of an abrasive that may be employed is PWA30 alumina from Fujimi. In some embodiments, abrasives are present in the coating compositions, for example, in an amount from about 1 wt. % to about 20 wt. % by weight in the final composition. Optionally, abrasives may be present in an amount from about 1% to about 15 wt. % of the coating composition. Further optionally, abrasives may be present in an amount from about 1 wt. % to about 12 wt. % of the coating composition.

Flattening agents may be present in the coating compositions. Flattening agents that may be inorganic, typically silica, although organic flattening agents or a combination of inorganic and organic materials may be used as flattening agents. Additional suitable flattening agents include polymeric agents including powder and waxes of flouoropolymer, polyethylene, polypropylene, natural waxes, and mixtures thereof. Examples of such flattening agents include but are not limited to Gasil UV70C silica from Ineos Silicas. ACEMATT HK125, ACEMATT HK400, ACEMATT HK440, ACEMATT HK450, ACEMATT HK460, ACEMATT OK412, ACEMATT OK 500, ACEMATT OK520, ACEMATT OK607, ACEMATT TS100, ACEMATT 3200, ACEMATT 3300 all available from Evonik; MPP-620XXF, Polyfluo 150, Propylmatte 31 all available from Micro Powders; Ceraflour 914, Ceraflour 913 all available from BYK; Gasil ultraviolet70C, Gasil HP280, Gasil HP 860, Gasil HP 870, Gasil IJ 37, Gasil ultraviolet 55C all available from PQ Corporation. Natural waxes suitable for flattening agents are available from, for example, BYK and Micro Powders.

Where a plurality of flattening agents is employed, the flattening agents may differ by chemistry (i.e., composition), particle size, particle size distribution, surface treatment, surface area and/or porosity.

In some embodiments, the surface coating compositions of the present invention may also comprise one or more surfactants. Surfactants that may be employed include, but are not limited to, BYK 3530, BYK 3532, BYK 3533 and BYK 3534 from BYK Chemie.

In some embodiments, the coating compositions of the present invention cure by exposure to UV light to form a coating for flooring, such as, but not limited to, linoleum, hardwood, resilient sheet, and tile flooring. These flooring products demonstrate, *inter alia,* improved stain resistance, improved scratch resistance, improved heat-exposure resistance and/or the ability to restore the floor using dry buffing maintenance.

Some embodiments of the present invention provide surface coating compositions wherein acrylates in an amount from about 60% to about 90% by weight in the final composition. In some embodiments, acrylates are present in an amount from about 70 wt. % to about 80 wt. %. In some embodiments, acrylates are present in an amount of about 75 wt. %. In some embodiments, a silica or fluoropolymer matting agent may be included, for example, in an amount from about 0.1 wt. % to about 15 wt. %. Desirably, silica matting agents are present in an amount from about 1 wt. % to about 6 wt. %.

The exemplary compositions of the present invention may also include at least one dispersing agent. The dispersing agents include, but are not limited to: acrylic block copolymers and combinations thereof.

Dispersing agents may be present in the coating compositions, for example, in an amount from about 0.1 wt. % to about 1 wt. %.

The exemplary compositions of the present invention may optionally include an antimicrobial agent. When present, the antimicrobial agent may be present in the coating compositions, for example, in an amount from about 0 wt. % to about 3 wt. %. Desirably, antimicrobial agents are present in an amount from about 0.1 wt. % to about 1 wt. %.

Without being bound by theory, it is believed that in some embodiments, the combination of a UV curable urethane or acrylate having one or more phosphate ester moieties and a silicone acrylate contributes to the improved stain resistance, scratch resistance and heat-exposure resistance demonstrated by the coatings of the present invention. While in other embodiments, it may be the combination of a UV curable curable urethane or acrylate having one or more phosphate ester moieties, a silicone acrylate and a fluoropolymer that contributes to the improved stain resistance, scratch resistance and heat-exposure resistance demonstrated by the coatings of the present invention. While in other embodiments, it may be the combination of a UV curable urethane or acrylate having one or more phosphate ester moieties and a fluoropolymer that contributes to the improved stain resistance, scratch resistance and heat-exposure resistance demonstrated by the coatings of the present invention.

Specifically, the surface coating compositions of the present invention have demonstrated significantly improved resistance to iodine stains and oil-based ink stains when compared to commercially available surface coating compositions which do not comprise the inventive combination of components. In fact, when exposed to oil-based ink, the surface coating compositions of the present invention formed beads of the oil-based ink and only required dry tissue paper to remove the ink. In contrast, a commercially available surface coating which did not comprise the inventive combination of components required mechanical agitation using a rubber eraser to remove the oil-based ink.

In some embodiments, the surface coating compositions of the present invention are able to resist stains caused by exposure to chemical, e.g. a strong acid (sulfuric acid), while commercial coatings used for similar applications - and which do not comprise the inventive combination of components - turned yellow and brown due to oxidation and corrosion by the sulfuric acid.

In further embodiments, the surface coating compositions of the present invention are able to resist damage caused by exposure to heat to a greater extent than commercially available surface coating compositions which do not comprise the inventive combination of components (e.g. a UV curable urethane or acrylate having one or more phosphate ester moieties and a fluoropolymer).

The invention will be described in greater detail by way of specific examples. The following examples are offered for illustrative purposes and are not intended to limit the invention in any manner. Those skilled in the art will readily recognize a variety of noncritical parameters which can be changed or modified to yield essentially the same results.

### Examples

### Example 1

Described in Table 1 (below) are two exemplary coating compositions of the present invention (I and II) and four comparative coating compositions (CI - CIII). These coatings were prepared by conventional means, readily understood by those skilled in the art.

**Table 1**

| | **I** | **II** | **CI** | **CII** | **CIII** |
|---|---|---|---|---|---|
| **Ingredient** | | | | | |
| Polyester acrylate | 14.61 | 14.61 | 16.20 | 16.14 | 14.86 |
| UV curable urethane with phosphate ester moiety | 5.84 | 5.84 | -- | -- | 5.94 |
| Polyurethane Acrylate | 14.61 | 14.61 | 16.20 | -- | 14.86 |
| Tricyclodecane dimethanol diacrylate | 11.68 | 11.68 | 12.96 | 12.91 | 11.89 |
| Cyclic Trimethylolpropane Formal Acrylate | -- | -- | 5.83 | -- | -- |
| Hexanediol Diacrylate | 5.84 | 5.84 | -- | 6.46 | 5.94 |
| Trimethylolpropane Triacrylate | 4.09 | 4.09 | 4.53 | 4.53 | 4.16 |
| Isobornyl Acrylate | -- | -- | 6.48 | 6.46 | -- |
| 2-Phenoxythyl Acrylate | 5.26 | 5.26 | 5.83 | 6.46 | 5.35 |
| Silicone Acrylate | 7.01 | 7.01 | 6.48 | 7.10 | 6.54 |
| Amine Synergist | 3.09 | 3.09 | 3.11 | 3.12 | 3.12 |
| Urethane Acrylate | 5.26 | 5.26 | -- | -- | 5.35 |
| Diphenyl ketone | 3.22 | 3.22 | 3.26 | 3.25 | 3.25 |
| 1-Hydroxy-cyclohexyl phenyl ketone | 0.82 | 0.82 | 0.82 | 0.82 | 0.81 |
| PTFE Wax | 7.07 | 7.07 | -- | -- | -- |
| PE/PTFE Wax | -- | -- | 7.15 | 7.15 | 7.14 |
| Surfactant | -- | -- | 0.62 | 0.-- | -- |
| Silica | 3.39 | 3.39 | 2.54 | 2.54 | 2.54 |
| Aluminum Oxide | 7.42 | 7.42 | 7.45 | 7.49 | 7.49 |
| Acrylic Block-copolymer | 0.81 | 0.81 | 0.5 | 0.75 | 0.75 |

### Example 2

### Scratch Resistance Test

Coatings of the present invention are evaluated against acrylate coatings which do not contain the combination of elements provided by embodiments of the present invention for their ability to resist abrasion. Specifically, the coatings are applied to a vinyl sheet substrate having a PVC film laminated thereon and and fully cured with a UV lamp. Each coated substrate is exposed to 100 grit sandpaper in a Byk Gardner Abrasion Tester for thirty (30) cycles. Gloss measurements are taken prior to and after the 30 cycles are completed. Pre-exposure and post-exposure gloss readings are compared and a percentage gloss retention is calculated. The value of gloss retention may be higher than 100% since the gloss of the coated substrate may increase during the abrasion process.

**Table 2**

| | **I** | **II** | **CI** | **CII** | **CIII** |
|---|---|---|---|---|---|
| **% Gloss Retention** | 101.8 | 109.9 | 68.3 | 67.5 | 81.8 |

### Iodine Stain Test

Two exemplary surface coating compositions of the present invention are evaluated against four comparative compositions for their ability to resistance non-aqueous based stains. A drop of iodine is applied to each coating and allowed to remain in place for one minute. The coatings are cleaned with water followed by acetone. The degree of yellowing is measured by use of a calorimeter that measures tristimulas color values of 'a', 'b', and 'L', where the color coordinates are designated as +a (red), -a (green), +b (yellow), -b (blue), +L (white), and -L (black). The degree of yellowing is expressed as *Delta b* (Δb) or difference in b values between the initial and final values.

**Table 3**

| | **I** | **II** | **CI** | **CII** | **CIII** |
|---|---|---|---|---|---|
| **Δb** | 7.94 | 7.94 | 9.25 | 12.82 | 7.35 |

As illustrated by the data described in Tables 2 and 3 (above), exemplary surface coatings of the present invention provide an unexpected combination of gloss retention and resistance to non-aqueous based stains.

### Example 3

### Heat Resistance Test

A vinyl sheet laminated with a PVC film is coated with the coating composition I of Example I and fully cured under a UV lamp (Example III), and a comparative example of the same laminated vinyl sheet is coated with a commercial coating composition available from Akzo Novel (UV Photoglaze^{™}) and fully cured under a UV lamp (Example CIV). A Leister heat-welding hot air blower equipped with a welding tip is placed on the coated side of the sheets with a temperature setting that provided about 440°C. When the blower is removed from the sheet in 10 seconds, Example III has a faint yellowing of the coated surface around where the heat was exposed, while Example CIV has burned damage marks that are clearly visible. When the two samples are exposed with the same setting for 15 seconds, Example III exhibits some heat damage marks similar to Example CIV exposed to the heat for 10 seconds, while Example CIV exhibits a clearly visible round burn region of the size twice as large as the heating nozzle of the blower.

### Example 4

### Chemical Resistance Test

The chemical resistance of the coated sheet of Example III and commercial sheets available from LG, Tarkett, Gerflor and Dajulong is compared. Samples of the sheets are exposed to 90% sulfuric acid. When exposed to sulfuric acid, all of the commercial sheets exhibit clearly visual damages, including yellowing or browning of the top surface including the coated surface, while Example III does not exhibit any visible damages.

### Example 5

### Stain Resistance Test

The stain resistance of the coated sheet of Example III and commercial sheets available from LG, Tarkett, Gerflor and Dajulong is compared. Samples of the tiles are marked with a permanent marker (e.g., Sharpie™ permanent marker). When the permanent marker is applied on Example III, the ink from the marker beads up on the sample surface. When the ink is allowed to dry on the applied surface, the ink is easily removed merely by wiping with a tissue paper. In contrast, all of the commercial sheets have ink marks remained on the surface when wiped with a tissue paper.

It is intended that any patents, patent applications or printed publications, including books, mentioned in this patent document be hereby incorporated by reference in their entirety.

As those skilled in the art will appreciate, numerous changes and modifications may be made to the embodiments described herein, without departing from the spirit of the invention. It is intended that all such variations fall within the scope of the invention.

## Claims

1. A surface coating composition comprising:
a UV curable urethane or acrylate having one or more phosphate ester moieties; and
a silicone acrylate.

2. The composition of claim 1, comprising from 1 wt% to 40 wt%, optionally from 4 wt% to 15 wt%, of the UV curable urethane or acrylate.

3. The composition of claim 2, wherein the weight ratio of the UV curable urethane or acrylate to the silicone acrylate is less than 1:1.

4. The composition of any one of claims 1 to 3, further comprising from 0.1 wt% to 40 wt%, optionally from 4 wt% to 15 wt%, of a fluoropolymer.

5. The composition of claim 4, wherein the fluoropolymer is selected from polytetrafluoroethylene (PTFE) and polyvinylidenefluouride (PVDF) and a mixture thereof.

6. The composition of claim 4 or claim 5, wherein the weight ratio of the fluoropolymer to the silicone acrylate is about 1:1.

7. The composition of any one of claims 4 to 6, comprising:
about 6 wt% of the UV curable urethane or acrylate having one or more phosphate ester moieties;
about 7 wt% of the silicone acrylate; and
about 7 wt% of the fluoropolymer.

8. The composition of claim 7, wherein acrylates comprise from 60 to 90 wt%, optionally from 70 to 80 wt%, further optionally about 75 wt%, of the composition.

9. The composition of any foregoing claim, comprising from 1 wt% to 40 wt%, optionally from 4 wt% to 15 wt%, of the silicone acrylate.

10. The composition of any foregoing claim, wherein the coating composition is substantially free of polyethylene.

11. The composition of any foregoing claim, further comprising an abrasive selected from aluminum oxide; silica and a combination thereof.

12. The composition of any foregoing claim, wherein a coating produced from the composition demonstrates a Δb of less than 10 in a 1-minute iodine test and greater than 90% gloss retention in a Gardner Scratch Test.

13. A flooring product comprising:
a substrate; and
a surface coating composition (i) according to any foregoing claim or (ii) comprising:
from 1 wt% to 40 wt% of a UV curable urethane or acrylate having one or more phosphate ester moieties;
from 0.1 wt% to 40 wt% of a silicone acrylate; and
from 0.1 wt% to 40 wt% of a fluoropolymer.

14. The product of claim 13, wherein the composition is applied at a thickness sufficient to provide a coating having a thickness of from 5 microns to 50 microns.

15. The product of claim 13 or claim 14, wherein the substrate comprises a plurality of layers comprising a decorative layer; a wear layer; and a backing layer.
